# EUROPEAN PATENT APPLICATION

(11) **EP 1 513 336 A2**
(43) Date of publication of application: **09.03.2005**
(21) Application number: 04255295.0
(22) Date of filing: 01.09.2004
(51) Int. Cl.: H04N 1/405

(54) **Method of detecting half-toned uniform areas in bit-map**

(30) Priority: 05.09.2003 US 655719
(71) Applicant: Xerox Corporation, Rochester, New York 14644 (US)
(72) Inventor: Kroon, Stephen M., Sherwood OR 97140 (US)
(74) Representative: Skone James, Robert Edmund

(57) **Abstract**

A technique for detecting a non-uniform area in a half-toned bit-map including partitioning (111) a half-toned bit map into a plurality of image tiles, comparing (113) each image tile to a corresponding a half-toned reference pattern, and identifying (115) an image tile as comprising a half-toned uniform area if it matches the corresponding reference pattern.

## Description

Raster type printers, which have been implemented with various print engines such as electrophotographic print engines and ink jet print engines, commonly employ half-toning to transform continuous tone image data to print data that can be printed as an array of dots of substantially similar size. For example, 24 bit/pixel continuous tone image data can be half-toned to a plurality of single color one-bit per pixel bit-maps.

It can sometimes be advantageous to process half-toned uniform regions of an image differently from non-uniform regions. However, it can be difficult and/or computationally expensive to identify half-toned uniform regions.

In accordance with the present invention, a method of detecting a portion of a half-toned uniform area in a half-toned bit-map comprises:
partitioning a half-toned bit map into a plurality of N-pixel tiles, each N-pixel tile having a marked pixel count M, and wherein the half-toned bit map is produced pursuant to a predetermined half-toning procedure;
comparing each N-pixel tile to a corresponding N-pixel reference tile that comprises a half-toned binary pattern that would be produced by the predetermined half-toning procedure for such N-pixel tile if the portion of a pre-half-toned data that resulted in such N-pixel tile were of uniform lightness;
identifying an N-pixel tile as comprising a portion of a half-toned uniform region if it matches the corresponding N-pixel reference tile.

### BRIEF DESCRIPTION OF DRAWINGS

FIG. 1 is a schematic block diagram of an embodiment of a raster type printing system;
FIG. 2 is a schematic block diagram schematically depicting the transformation of multi-bit per pixel data to one-bit per pixel data;
FIG. 3 is a schematic illustration of an embodiment of a half-toned one-bit per pixel bit-map that is partitioned into a plurality of multi-pixel image tiles;
FIG. 4 is a schematic flow diagram of a procedure for identifying non-uniform areas in the half-toned bit-map of FIG. 3;
FIG. 5 is a schematic diagram of a half-tone threshold value array that can be employed to produce the half-toned bit-map of FIG. 3;
FIG. 6 is a schematic illustration of an embodiment of a half-tone cell that was employed to form the half-tone threshold value array illustrated in FIG. 5;
FIG. 7 is a schematic block diagram of an array of groups of reference patterns respectively associated with the array of image tiles of the bit-map of FIG. 3;
FIG. 8 schematically depicts that each of the groups of reference patterns includes a plurality of reference pattern tiles;
FIG. 9 is a schematic block diagram of an array of reference pattern generating pixel tiles that can be employed to generate reference pattern tiles;
FIG. 10 is a schematic illustration of embodiments of reference pattern tiles for the different marked bit counts that would be generated by the upper right hand pattern generating tile of FIG. 5;
FIG. 11 schematically illustrates an embodiment of reference pattern tiles that can be compared with the image tiles of the bit-map of FIG. 3 pursuant to the procedure of FIG. 4; and,
FIG. 12 schematically illustrates the tiles of the bit-map of FIG. 3 overlaid on the reference pattern tiles of FIG. 10.

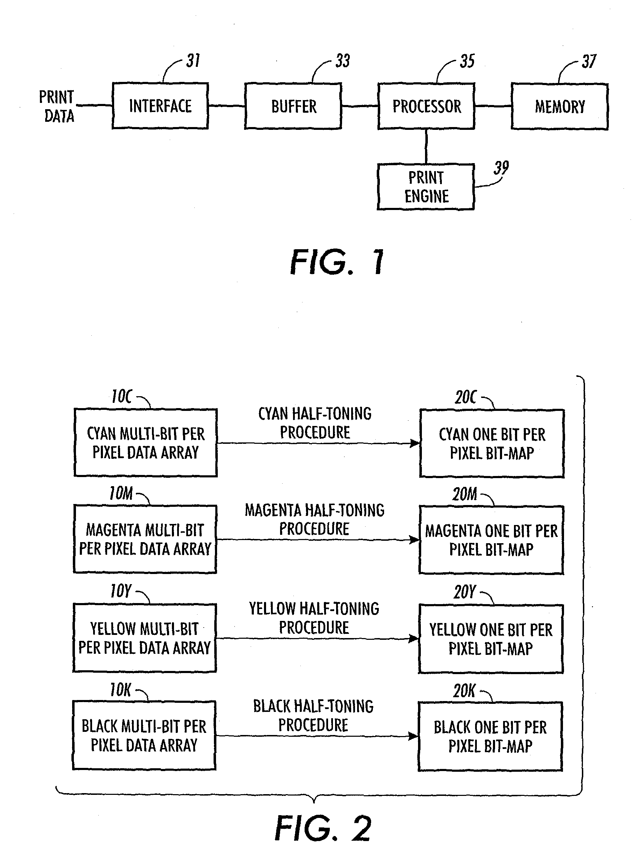

FIG. 1 is a schematic block diagram of an embodiment of a printing apparatus that includes an interface 31 that receives print data, for example from a host computer, and stores the print data in a buffer memory 33. A processor 35 is configured to process the print data to produce bit mapped raster data that is stored in a memory 37. A print engine 39 prints an image pursuant to the bit map raster data generated by the processor 35. The print engine 39 can be an electrophotographic print engine or an ink jet print engine, for example.

Printing is accomplished by selectively printing, depositing, applying or otherwise forming markings such as dots on a receiver surface or substrate that can be a print output medium such as paper or a transfer surface such as a transfer drum. If a transfer surface is used, the image formed or printed on the transfer surface is appropriately transferred to a print output medium such as paper. In raster type printing, the markings can be formed at locations of a grid pattern that can be called a pixel array wherein each location that is capable of receiving at least one marking is called a pixel or pixel location. The data produced by the processor that defines what marking (s) , if any, are to be applied to pixel locations on a pixel by pixel basis can be called pixel data. Commonly, the pixel data can comprise a plurality of one bit per pixel bit-maps, one bit-map for each primary color plane (e.g., cyan, magenta, yellow, black).

As schematically depicted in FIG. 2, respective primary color one bit per pixel bit-maps 20C, 20M, 20Y, 20K for an image can be generated by half-toning respective primary color multi-bit per pixel data arrays 10C, 10M, 10Y, 10K. By way of illustrative example, the bit-maps and the multi-bit per pixel data arrays are for cyan, magenta, yellow and black colors. The half-toning can be accomplished for example by using a respective predetermined threshold value array for each of the primary colors. For example, different threshold values can be used for different primary colors. In this manner, single color multi-bit per pixel data is transformed to single color one-bit per pixel data.

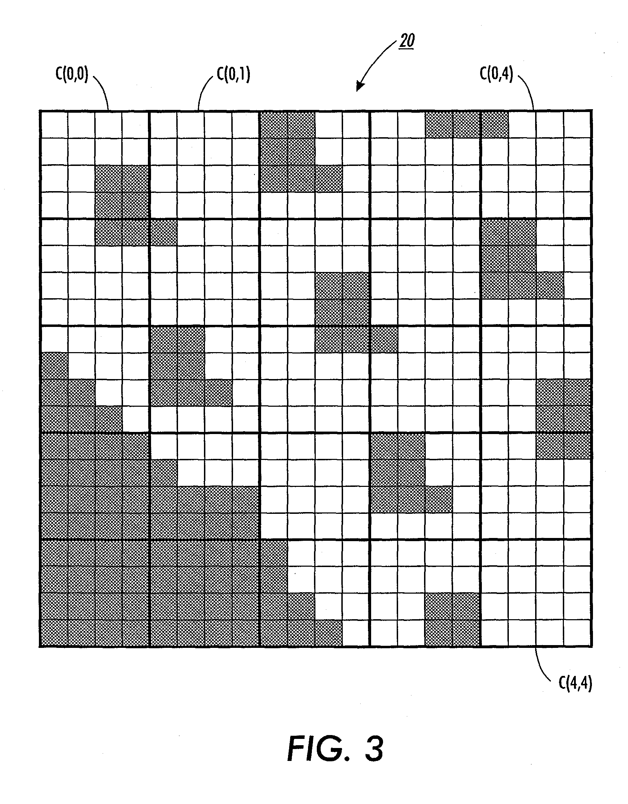

FIG. 3 is a schematic illustration of an embodiment of a single color half-toned one bit per pixel bit-map 20 of an arbitrary half-toned image fragment, for example. The squares represent the pixel locations of the half-toned one bit per pixel bit-map, while the contents of each square represents a data bit or pixel for the corresponding pixel location, for example for a given color plane. The contents of the half-toned one bit per pixel bit-map would comprise for example the result of half-toning multi-bit per pixel data (e.g., continuous tone, gray-scale, luminance, darkness, intensity or multi-level pixel data) to bitmapped raster data that contains one bit per pixel. Illustrating a half-toned one-bit per pixel bit-map in a grid pattern can aid in understanding that each bit is data for a particular location in a pixel array for a particular color.

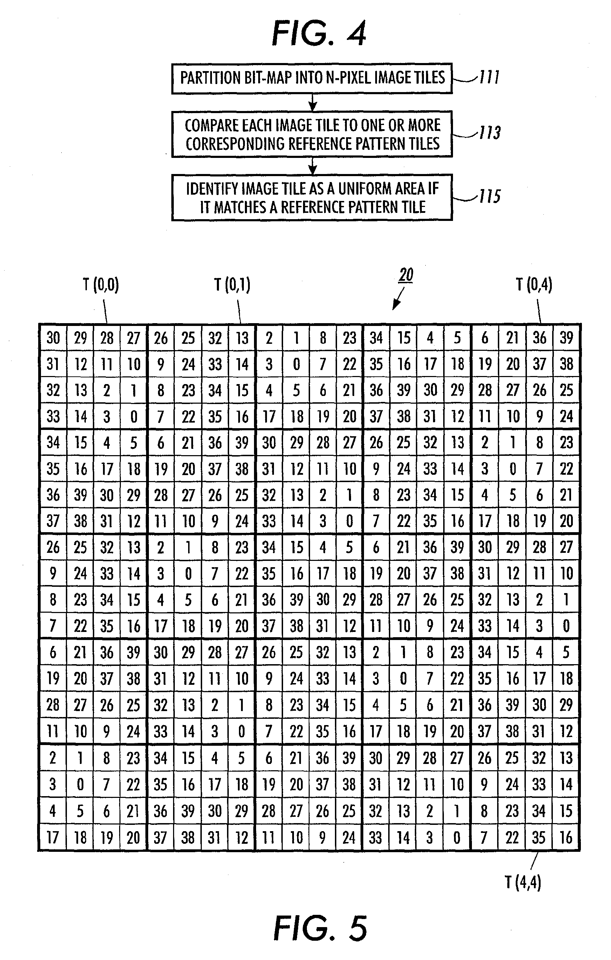

FIG. 4 is a schematic flow diagram of a procedure for finding or identifying half-toned uniform regions in the half-toned bit-map 20. A half-toned uniform region comprises a region of the half-toned bit-map that represents or corresponds to a region of substantially uniform lightness or value in the pre-half-toned multi-bit per pixel data, for example. At 111 the half-toned bit map 20 is organized or partitioned into N-pixel image tiles, cells or sub-groups C(0, 0) through C(4, 4), as depicted in FIG. 3. At 113 each image tile is compared with one or more N-pixel corresponding reference pattern tiles, wherein an N-pixel reference tile comprises a half-toned binary pattern that would be produced by the half-toning procedure that generated the half-toned bit-map 20 if the original multi-level pixel data that resulted in such image tile were of uniform lightness. In other words, each reference pattern tile for a given image tile location comprises a half-toned binary pattern for an image tile that comprises a portion of a half-toned uniform area. At 115, if an N-pixel image tile matches a corresponding reference pattern tile, such N-pixel image tile is identified as comprising a portion of a half-toned uniform region.

By way of illustrative example, the reference pattern tiles can comprise half-toned patterns that would be produced for pre-half-toned data of uniform lightness or value by half-toning pursuant to the threshold value array employed to produce the half-toned black bit-map 20. In other words, the reference tiles can comprise binary patterns that would be produced pursuant to half-toning to represent portions of pre-half-toned regions of uniform lightness and thus comprise portions of half-toned uniform regions, wherein such binary patterns are produced by half-toning pursuant to the threshold value array employed to produce the half-toned black bit-map. For example, as described further herein, a reference pattern tile can have a pattern that corresponds to the relative ordering of the half-tone threshold values for such corresponding image tile. In other words, the pixels of a reference pattern tile can be filled or marked in a sequence that corresponds to the relative ordering of the half-tone threshold values of the corresponding image tile. Further, the number of marked pixels in a reference tile can be identical to the image tile with which the reference is being compared. Thus, for example, for each image tile location in the bit-map, there can be a plurality of references tiles that can be indexed by marked pixel count. Each image tile can be compared with a corresponding reference tile having the same number of marked pixels.

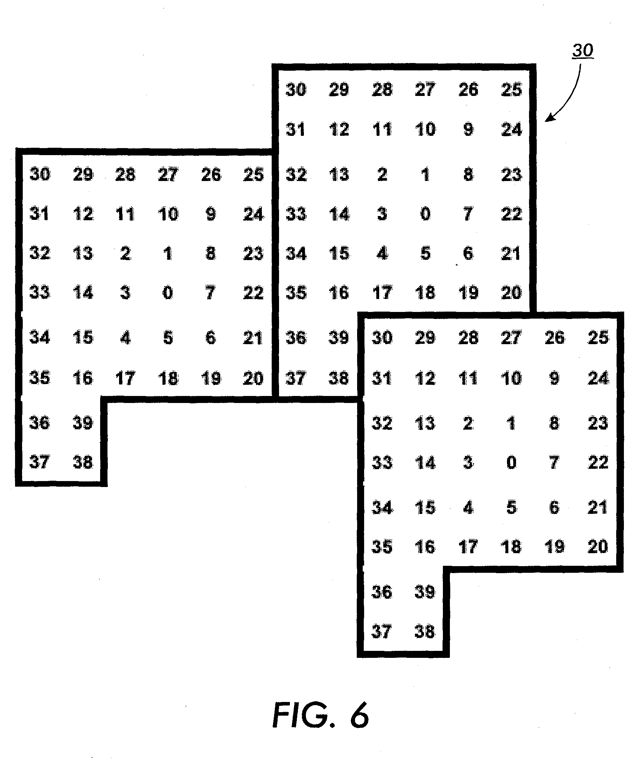

FIG. 5 is an embodiment of a half-tone threshold value array that can be employed to generate the half-toned bit-map 20 of FIG. 3. Each pixel location of the half-toned bit-map 20 of FIG. 3 has an associated half-tone threshold value as represented by the threshold value inscribed at each of the threshold value array locations that correspond to the pixel array locations of the bit-map of FIG. 3. For ease of illustration, the half-tone threshold value array comprises a tessellation of a 41-level half-tone cell 30 shown in FIG. 6. In actual implementations, the half-tone cells employed can be larger or smaller. The half-tone threshold value array of FIG. 5 is arranged or grouped into threshold array tiles or subgroups T(0, 0) through T(4, 4) that are associated with the half-toned bit-map tiles C(0, 0) through C(4, 4).

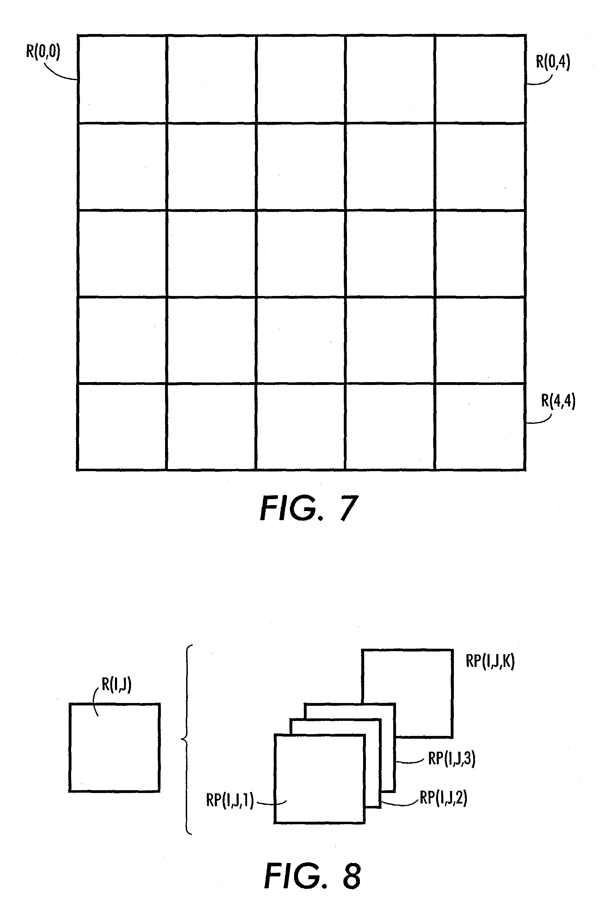

FIG. 7 is a schematic illustration of an embodiment of a reference pattern array that is organized or partitioned into a plurality of reference pattern groups R(0, 0) through R(4, 4) that are respectively associated with respective image tiles C(0, 0) through C(4, 4) of the bit-map 20 of FIG. 3. As schematically depicted in FIG. 8, each reference pattern group R(I, J) includes a plurality of N-pixel reference patterns RP(I, J, K) that are respectively of the same size (i.e., number of pixels) and shape (i.e., number of rows and number of columns) as the respectively associated image tiles C(I, J) of the bit-map of FIG. 3. In this manner, the reference pattern array can be considered a three-dimensional array of reference patterns or tiles RP(I, J, K).

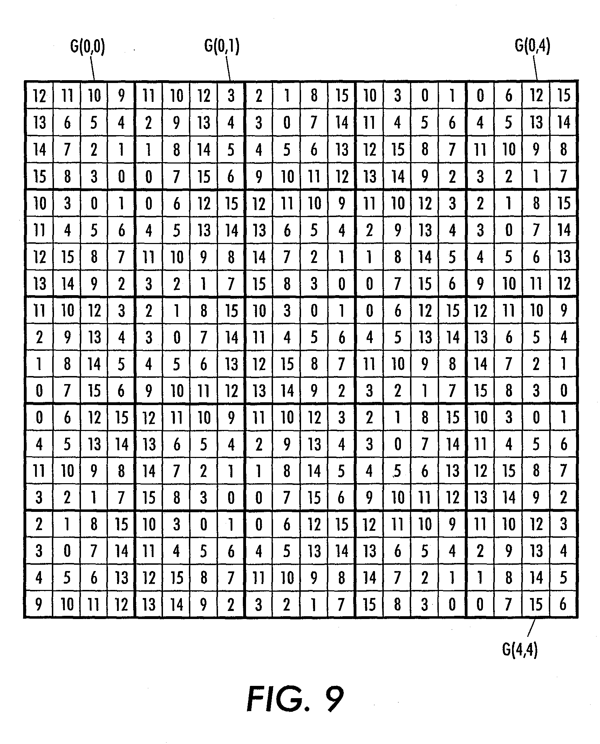

FIG. 9 is a schematic illustration of an embodiment of a pixel array of reference pattern generating tiles, cells or subgroups G(0, 0) through G(4, 4), wherein the pixel locations of the pixel array of FIG. 8 correspond to the pixel locations of the bit-map of FIG. 3. The reference pattern generating tiles G(0, 0) through G(4, 4) are associated with the reference pattern groups R(0, 0) through R(4, 4), the threshold value array tiles T(0, 0) through T(4, 4), and the bit-map tiles C(0, 0) through C(4, 4). Each reference pattern generating tile is same size (i.e., number of pixels) and shape (i.e., number of rows and number of columns) as the respectively associated image tile of the pixel array of FIG. 3.

Each pattern generating tile G(0, 0) through G(4, 4) includes a fill order pattern that is based on the associated threshold value array T(0, 0) through T(4, 4). For example, the fill order values associated with a reference pattern generating cell correspond to the relative ordering of the threshold values in the corresponding threshold value array cell. That is, each pixel of a pattern generating tile G(0, 0) through G(4, 4) more particularly has an associated fill-order value or sequence number that corresponds to the relative order of the corresponding threshold value in the corresponding threshold value array cell T(0, 0) through T(4, 4), such that each pixel of a pattern generating cell has an associated fill-order value between 1 and N for the particular example of an N-pixel image tile. In the event that the same threshold value is associated with two or more pixels in a pattern generating tile, two or more in sequence numbers can be arbitrarily respectively assigned to such two or more pixels. In this manner, each reference pattern generating tile includes pixels having each of the sequence numbers from 1 through N.

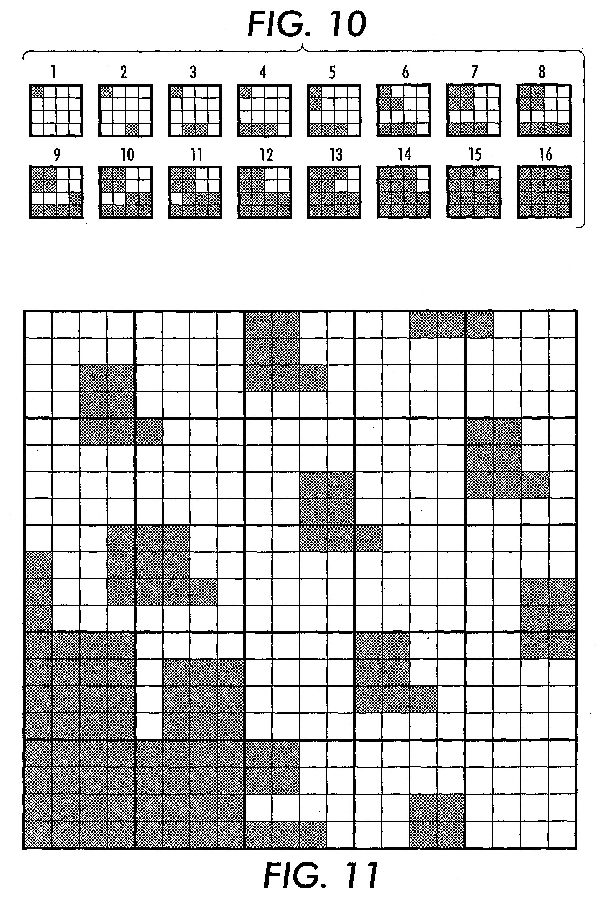

The N-pixel reference pattern tiles RP(I, J, K) for each reference pattern group R(0, 0) through R(4, 4) are generated by generating a binary pattern for each sequence number in the corresponding reference generating tile, wherein the marked pixels comprise the pixel associated with such sequence number and the pixels associated with any smaller sequence number(s). FIG. 10 is a schematic illustration of embodiments of the N-pixel reference pattern tiles RP(0, 0, K), for K=1 through K=16, for the upper right hand reference pattern group R(0, 4) that would be generated by the different sequence numbers of the corresponding pattern generating tile G(0, 4).

Since an image tile can match only a reference pattern tile that has the same number of marked pixels, an image tile conveniently needs to be compared only to that reference pattern tile in the corresponding group of reference pattern tiles that has the same number of marked pixels. Thus, the location and marked pixel count for an image tile can be conveniently used as an index to the corresponding group of reference patterns wherein the reference patterns can be identified by the number of marked pixels they contain, for example. That is, the index K for the reference pattern tiles RP(I, J, K) of the reference group R(I, J) corresponds to the number of marked pixels in the Kth reference pattern tile.

It should be noted that the foregoing generates reference pattern tiles having at least one marked pixel since an image tile having zero marked pixels can conveniently be classified as comprising a portion of a half-toned uniform region without comparison to a reference tile having no marked pixels. Similarly, an image tile having all pixels marked can be conveniently classified as comprising a portion of a half-toned uniform region without comparison to a reference pattern tile.

FIG. 11 schematically illustrates an embodiment of a pixel array that contains the reference pattern tiles that would be compared with the bit-map of FIG. 3 pursuant to the procedure of FIG. 4.

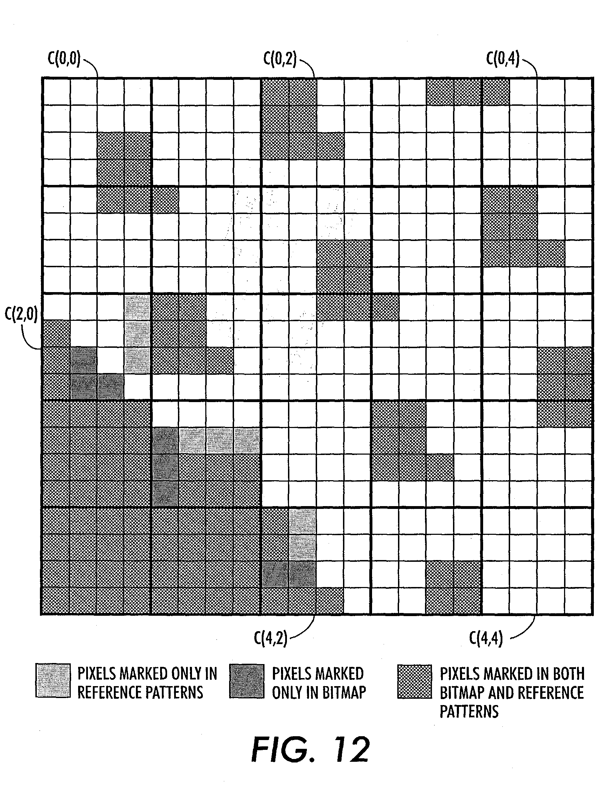

FIG. 12 schematically illustrates the bit-map of FIG. 3 overlaid on the reference patterns of FIG. 10. The tiles of the bit-map that do not match their respective reference pattern tiles correspond to those tiles wherein at least one marked pixel of an image tile does not overlie a marked pixel of the reference pattern tile. In this example, image tiles C(2, 0), C(1, 3) and C(2, 4) do not match their reference patterns, and thus can be considered to be non-uniform areas. The image tiles that match their respective reference pattern tiles can be considered uniform areas.

It should be appreciated that, depending upon the manner in which half-toning is performed, a given tile C(0, 0) through C(4, 4) in the bit-map of FIG. 3 can have a plurality of corresponding reference patterns for a given marked pixel count. In this case, a tile having a plurality of corresponding reference pattern tiles would be compared to each of such corresponding reference pattern tiles.

## Claims

1. A method of detecting a portion of a half-toned uniform area in a half-toned bit-map comprising:
partitioning a half-toned bit map into a plurality of N-pixel tiles, each N-pixel tile having a marked pixel count M, and wherein the half-toned bit map is produced pursuant to a predetermined half-toning procedure;
comparing each N-pixel tile to a corresponding N-pixel reference tile that comprises a half-toned binary pattern that would be produced by the predetermined half-toning procedure for such N-pixel tile if the portion of a pre-half-toned data that resulted in such N-pixel tile were of uniform lightness;
identifying an N-pixel tile as comprising a portion of a half-toned uniform region if it matches the corresponding N-pixel reference tile.

2. A method according to claim 1, wherein the predetermined half-toning procedure utilises a predetermined threshold value array.

3. The method of claim 2, wherein comparing each N-pixel tile to an N-pixel reference tile comprises comparing each N-pixel tile to an associated N-pixel reference tile that comprises a half-toned binary pattern that would be produced for such N-pixel tile pursuant to the predetermined threshold value array if the portion of the original data that resulted in such N-pixel tile were of uniform lightness, wherein the pixels of the N-pixel reference tile are filled pursuant to a fill order that is based on the half-tone threshold values that produced such N-pixel tile.

4. The method of claim 2, wherein comparing each N-pixel tile to an N-pixel reference tile comprises comparing each N-pixel tile to an associated N-pixel reference tile that comprises a half-toned binary pattern that would be produced for such N-pixel tile pursuant to the predetermined threshold value array if the portion of the original data that resulted in such N-pixel tile were of uniform lightness, wherein the pixels of the N-pixel reference tile are filled by normalizing the half-tone threshold values that produced such N-pixel tile.

5. The method of claim 2, wherein comparing each N-pixel tile to an N-pixel reference tile comprises comparing each N-pixel tile to an associated N-pixel reference tile that comprises a half-toned binary pattern that would be produced for such N-pixel tile pursuant to the predetermined threshold value array if the portion of the original data that resulted in such N-pixel tile were of uniform lightness, wherein the pixels of the N-pixel reference tile are filled pursuant to a fill order pattern of fill order values that comprise a sequence that corresponds to a relative ordering of the half-tone threshold values that produced such N-pixel tile, wherein the fill order values are between 1 and N.

6. The method of claim 1 or claim 2, wherein comparing each N-pixel tile to an N-pixel reference tile comprises comparing each N-pixel tile to an associated N-pixel reference tile that comprises a half-toned binary pattern that would be produced by the predetermined half-toning procedure for such N-pixel tile if the portion of the original data that resulted in such N-pixel tile were of uniform lightness, wherein the N-pixel reference tile includes the same number of marked pixels M as the N-pixel tile to which it is being compared.

7. A computer program product storing program instructions for carrying out a method according to any of the preceding claims.
